# EUROPÄISCHE PATENTSCHRIFT

(11) **EP 1 297 944 B1**
(45) Veröffentlichungstag und Bekanntmachung des Hinweises auf die Patenterteilung: **16.01.2008**
(21) Anmeldenummer: 01123507.4
(22) Anmeldetag: 29.09.2001
(51) Int. Cl.: B29C 65/16, B29C 65/00

(54) **Verfahren zum Laserdurchstrahlschweissen von Kunststoffteilen**
Process for laser beam welding of plastic parts
Procédé de soudage par faisceau laser de pièces en matière plastique

(43) Veröffentlichungstag der Anmeldung: 02.04.2003
(73) Patentinhaber: Institut für angewandte Biotechnik und Systemanalyse an der Universität Witten/Herdecke GmbH, 58455 Witten (DE); EUREA VERPACKUNGS GMBH & CO. KG., D-48432 Rheine (DE)
(72) Erfinder: Hartmann, Siegfried, Dipl.-Ing., 49477 Ibbenbüren (DE); Wurr, Egon, Dipl.-Ing., 48432 Rheine (DE); Wolff, E.K. Dr., 58313 Herdecke (DE); Glotzbach, U. Dipl.Ing., 58454 Witten (DE)
(74) Vertreter: Hoffmeister, Helmut

(56) Entgegenhaltungen:
- WO-A1-00/20157
- DE-A1- 1 629 225
- DE-A1- 19 925 203
- US-A- 3 560 291
- US-A- 6 045 649
- US-B1- 6 220 673
- PATENT ABSTRACTS OF JAPAN vol. 016, no. 450 (M-1312), 18. September 1992 (1992-09-18) & JP 04 157082 A (MITSUBISHI HEAVY IND LTD), 29. Mai 1992 (1992-05-29)

## Beschreibung

Die Erfindung betrifft ein Verfahren zum Laserdurchstrahlschweißen von mehr als zwei Kunststoffteilen.

Aus der US 6,207,925 B1 ist es bekannt, Kunststoffteile durch die von einem Laser ausgesandte Lichtenergie miteinander zu verschweißen. Hierbei wird ein erstes Kunststoffteil gewählt, das für das Licht des Lasers mit einer bestimmten Wellenlänge durchlässig ist. Außerdem wird ein zweites Teil aus einem solchen Kunststoff hinzugefügt, der die Lichtenergie des Laserstrahls überwiegend absorbiert und so zu einer lokalen Erwärmung und schließlich zum partiellen Aufschmelzen des absorbierenden Kunststoffs führt. Die Schmelze verbindet sich mit den Oberflächenschichten des ersten, lichtdurchlässigen Kunststoffteils und führt so zu einer stoffschlüssigen Verbindung der Kunststoffteile. Es hat sich allerdings gezeigt, dass die Aufschmelzung überwiegend in einer Randzone des lichtenergieabsorbierenden Kunststoffteiles stattfindet und ein Aufschmelzen des lichtdurchlässigen Fügepartners nur sehr partiell an der Oberfläche erfolgt, so dass keine innige, symmetrische Verbindung der Fügepartner erfolgt. In einem Schnitt durch die Schweißnaht gesehen, bildet sich die Naht linsenförmig aus, wobei der weitaus größerer Teil dieser Linse im Querschnitt des absorbierenden Kunststoffteils eingebettet liegt.

Aus der WO 00/20157 ist ein Verfahren zum Laserdurchstrahlschweißen von Kunststoffteilen bekannt, bei dem die Lichtenergie eines Laserstrahls durch ein Energiekonvertierungsmittel absorbiert und in Wärmeenergie umgewandelt wird. Das erste Kunststoffteil ist durchlässig für einen Laserstrahl mit einer bestimmten Wellenlänge und kann durchstrahlt werden. Das Energiekonvertierungsmittel ist in eine Grenzschicht zwischen einem ersten Kunststoffteil und einem daran angepressten Kunststoffteil eingebracht. Die Kunststoffteile werden im Oberflächenbereich an der Grenzschicht partiell aufgeschmolzen. Mit dem Abkühlen wird eine Schweißnahtstelle als innige Verbindung zwischen den Kunststoffteilen ausgebildet. Der Ort der Lichtabsorption und demzufolge der Ort der Erwärmung und Aufschmelzung ist hierbei in die Grenzfläche hinein gelegt, so dass sich eine symmetrische Ausbildung der Verbindungsstelle ergibt. Allerdings ist es bei dem bekannten Verfahren nicht möglich, mehr als zwei Fügepartner zu verbinden.

Ein Verfahren nach dem Oberbegriff von Anspruch 1 ist aus "Laser Welding of Fabrics Using Infrared Absorbing Dyes" von P.A. Hilton, I.A. Jones und R.A. Sollaranti, Proceedings From Joining of Advanced and Specialty Materials, 9-11 October 2000, St. Louis, Mo, ASM International bekannt.

Es stellt sich daher die Aufgabe, ein Verfahren zum Laserdurchstrahlschweißen von Kunststoffteilen anzugeben, durch das bei mehr als zwei Kunststoffteilen einen Verbindung durch Laserstrahlschweißen ermöglicht wird, wobei wiederum die Symmetrieebene der hergestellten Schweißnähte im wesentlichen in der Grenzschicht zwischen den jeweiligen aneinander liegenden Fügepartnern verläuft.

Die Aufgabe wird bei einem Verfahren zum Laserdurchstrahlschweißen von mehr als zwei Kunststoffteilen mit den Merkmalen des Anspruchs 1 gelöst.

Mit absorbierend sind hier solche Energiekonvertierungsmittel bezeichnet, die einen Absorptionsgrad von größer oder gleich 10% der eingestrahlten Lichtenergie aufweisen.

Als lichtdurchlässig sind hier solche Energiekonvertierungsmittel bezeichnet, die einen Absorptionsgrad von kleiner als 10% der eingestrahlten Lichtenergie aufweisen.

Erfindungsgemäß ist vorgesehen, dass die Kunststofflagen für Laserlicht durchlässig sind. Lediglich die Beschaffenheit der zu unterst liegenden Lage ist ohne Einfluss auf die Wirkungen des erfindungsgemäßen Verfahrens. In jede der so entstandenen Grenzflächen zwischen jeweils zwei Fügepartnern kann partiell oder vollflächig ein Energiekonvertierungsmittel eingebracht werden. Hierbei wird jeweils für jede Grenzschicht ein Laser mit bestimmter Wellenlänge und ein in diesem Wellenlängenbereich absorbierendes Energiekonvertierungsmittel gewählt. Die Wellenlängen werden so gewählt, dass eine Energiekonvertierung jeweils nur in einer Grenzschicht erfolgt und der Laserstrahl beim Durchtritt durch die andere(n) Grenzschicht(en) diese ungehindert passieren kann. Es ist somit insbesondere möglich, Kunststoffgewebe oder Kunststofffolien in einem einzelnen Arbeitsgang mit verschieden verlaufenden Nähten in jeder Grenzschicht zu verbinden.

Der besondere Vorteil des erfindungsgemäßen Verfahrens liegt darin, dass mehr als zwei Kunststoffteile in einem einzigen Schweißvorgang miteinander verbunden werden können; es muss also nicht mehr ein lagenweises Schweißen erfolgen. Grundgedanke ist, dass jeder zu verschweißenden Grenzschicht mindestens ein Laserstrahl mit einer bestimmten Wellenlänge und ein spezifisches Energiekonvertierungsmittel zugeordnet sind. Die Lichtdurchlässigkeit der Kunststoffteile ist so gewählt, dass jeder Laserstrahl ungehindert durch ein oder mehrere Lagen von Kunststoffteilen tritt, bis er auf diejenige Grenzschicht trifft, in die ein Energiekonvertierungsmittel eingebracht ist, das das Licht seiner spezifischen Wellenlänge absorbiert. Besonders vorteilhaft ist, dass die Schweißnähte so unabhängig voneinander verlaufen können und nicht deckungsgleich sein müssen.

Wesentlich ist, dass der Ort der Lichtabsorption und demzufolge der Ort der Erwärmung und Aufschmelzung in die Grenzfläche hinein gelegt wird.

Die Vorteile liegen weiterhin darin, die Kunststoffteile unabhängig vom Verlauf der späteren Schweißnaht gestaltet und hergestellt werden zu können. Das Einbringen des Energiekonvertierungsmittels in die Grenzschicht kann mit allen bekannten Techniken, wie Aufrakeln, Aufdrucken, Beflocken, Bestreuen oder Besprühen nachträglich erfolgen. Hierbei ist es insbesondere möglich, das Energiekonvertierungsmittel nur dort in eine Grenzschicht einzubringen, wo der gewünschte Verlauf der Schweißnaht liegt. Eine vollflächige Beigabe von dem Energiekonvertierungsmittel im Bereich einer Grenzschicht ist möglich, aber nicht notwendig.

Weiterhin ist es vorteilhaft, dass über den Energieabsorptionskoeffizienten und die Schichtdicke des Energiekonvertierungsmittels und über die Wellenlänge des verwendeten Lasers die in den Bereich der Schweißnaht einzubringende Wärme gezielt beeinflusst werden kann. Somit kann eine Wärmemenge erzeugt werden, die für ein Aufschmelzen und inniges Verbinden der Fügepartner ausreichend ist, die aber nicht zu einer materialschädigenden Erhitzung der Kunststoffe oder gar deren lokaler Zerstörung führt.

Außerdem ist es gemäß einer weiteren Ausführungsform möglich, eine weitere Grenzschicht vorzusehen, in der ein Verschweißen nur dann erfolgt, wenn wenigstens zwei Laserstrahlen gleichzeitig auf ein Energiekonvertierungsmittel treffen, das das Licht beider Laserstrahlen absorbiert. Hierbei wird das Energiekonvertierungsmittel nach Absorptionskoeffizient und Schichtdicke so gewählt, dass die Energie eines einzelnen Laserstrahls noch nicht ausreichend ist, um ein Aufschmelzen der Fügepartner im Bereich der Grenzschicht zu erreichen. Ein Aufschmelzen erfolgt erst dann, wenn noch ein zusätzlicher Laserstrahl auf dieses Energiekonvertierungsmittel gerichtet ist.

Beispielsweise können auf diese Weise insgesamt vier Kunststoffteile durch den Einsatz von zwei Lasern mit unterschiedlicher Wellenlänge verschweißt werden, nämlich eine erste Grenzschicht mit dem ersten Laser, eine zweite Grenzschicht mit dem zweiten Laser und eine dritte Grenzschicht durch gemeinsamen Einsatz beider Laser.

Mit den erfindungsgemäßen Verfahren ist es außerdem möglich, eine Siegelnaht herzustellen. Hierbei werden solche Energiekonvertierungsmittel gewählt, die nur in einem sehr engen Band absorbierend für Lichtenergie mit einer bestimmten Wellenlänge wirken. Somit ist es nur bei Kenntnis der speziellen Wellenlänge und den weiteren auf die jeweilige Grenzschicht angepassten Parametern des Lasers möglich, ein Behältnis zu verschweißen und die Schweißnaht zerstörungsfrei wieder zu öffnen. Diese Funktion nach Art eines Schlüssels kann dadurch verstärkt werden, dass Laser mehrerer Wellenlängen gleichzeitig auf das Energiekonvertierungsmittel wirken müssen, um eine lokale Aufschmelzung zu erreichen. Bei einer solchen gezielten Öffnung nur der Siegelnaht bleiben die verschweißten Kunststoffteile in ihrer Struktur erhalten, wohingegen ein unberechtigter Öffnungsversuch durch unkontrollierte Wärmezufuhr von außen in einer vollständigen Erweichung und entsprechend sichtbaren Beschädigung der Kunststoffteile mündet.

Vorgesehen sein kann auch, dass das Energiekonvertierungsmittel in Form einer lichtenergieabsorbierenden Schweißfolie zwischen die Kunststoffteile gelegt wird. Hierdurch kann auf einen Bedruckungsvorgang oder dgl. verzichtet werden. Die Schweißfolie wird im Moment und am Ort der Schweißung zugeführt. Außerdem ist es möglich, nicht miteinander kompatible Kunststoffteile über die Schweißfolie als Haftvermittler zu verbinden.

In einer weiteren vorteilhaften Variante der erfindungsgemäßen Verfahren besteht die Schweißfolie aus einem Kunststoff, der im Gegensatz zu den Fügepartnern eine niedrigere Schmelztemperatur hat und in den neben dem Energiekonvertierungsmittel noch weitere Zusatzstoffe eingebunden sind. Hierdurch wird erreicht, dass beim Bestrahlen mit Laserenergie ein vollständiges Aufschmelzen der Schweißfolie erfolgt und in dem Schmelzebad die Zusatzstoffe enthalten sind. Beim Übergang der Wärme auf die Fügepartner und deren Aufschmelzen im Oberflächenbereich verteilt sich das Schweißbad mit den Zusatzstoffen im gesamten Bereich der Schweißnahtstelle, so dass auf diesem Wege ein gezieltes Einbringen der Zusatzstoffe in die Schweißnaht möglich ist.

Es können z. B. durch ultraviolettes Licht aktivierte Vernetzungsmittel eingebracht werden, so dass durch anschließendes Bestrahlen der Schweißnaht mit ultraviolettem Licht eine zusätzliche Verfestigung der Schweißnaht erreicht wird. Außerdem können Zusatzstoffe vorgesehen sein, die ultraviolettes Licht reflektieren, so dass der Verlauf und die Qualität einer Schweißnaht im sogenannten Schwarzlicht sichtbar werden.

Bevorzugt wird das Energiekonvertierungsmittel auf die Oberfläche des lichtdurchlässigen Kunststoffteils aufgebracht und das zweite Kunststoffteil daran angepresst. Durch den Auftrag auf die Rückseite des durchstrahlten ersten Kunststoffteils werden Grenzflächenreflektionen weitgehend vermieden und die eingestrahlte Laserenergie gelangt nahezu ohne Verluste in das Energiekonvertierungsmittel.

In der überwiegenden Anzahl von Anwendungsfällen ist Kohlenstoff ein geeignetes Energiekonvertierungsmittel, da es alle Wellenlängen des Lichtes absorbiert und somit den Einsatz kostengünstiger Laser ermöglicht. Beim mehrlagigen Schweißen kann es in die zu unterst liegende, also zuletzt durchstrahlte Grenzschicht eingebracht werden, um dort alle von oben durchdringenden Laserstrahlen zu absorbieren. Zudem ist Kohlenstoff in Form von Ruß ein kostengünstiges, weit verbreitetes Füllmittel der Kunststoffindustrie. Ruß ist auch geeignet, in lösemittelhaltigen Lacken oder Polymerlösungen eingebunden zu und dann mit den oben genannten Verfahren wie Drucken etc. auf einen der Fügepartner aufgebracht zu werden.

Die Erfindung wird nachfolgend mit Bezug auf die Zeichnung näher erläutert. Es zeigen:
- Fig. 1: das Verschweißen von vier Kunststoffteile in schematischer Darstellung;
- Fig. 2: die Lichtabsorption zweier Energiekonvertierungsmittel in einem Diagramm über die Wellenlänge, und
- Fig. 3: die Lichtabsorption bei einer Siegelnaht in einem Diagramm über die Wellenlänge.

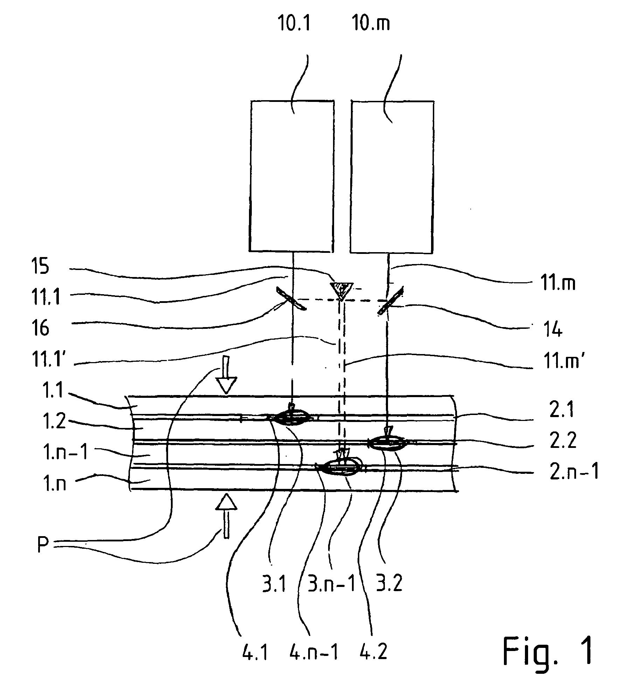

Fig. 1 zeigt die Verschweißung von insgesamt vier Kunststoffteilen 1.1.,...,1.n mit zwei Lasern 10.1, 10.m. Ein erster Laserstrahl 10.1 läuft zunächst an einem Klappspiegel 15 vorbei und trifft in einer ersten Grenzschicht 2.1 auf ein erstes Energiekonvertierungsmittel 4.1, von dem er absorbiert wird. Es entsteht eine erste Schweißnahtstelle 3.1, die die Kunststoffteile 1.1 und 1.2 miteinander verbindet.

Ein weiterer Laserstrahl 11.m läuft an einem Klappspiegel 14 vorbei, durchläuft das erste Kunststoffteil 10.1, die erste Grenzschicht 2.1 und das zweite Kunststoffteil 10.2 ungehindert und wird in der zweiten Grenzschicht 2.2 von einem Energiekonvertierungsmittel 4.1 absorbiert. Es entsteht eine weitere Schweißnahtstelle 3.2, die die Teile 10.2 und 10.3 miteinander verbindet.

Dann werden die Klappspiegel 14, 16 in die Laserstrahlen 11.1, 11.m gelenkt. Es erfolgt eine Bündelung beider Strahlen 11.1, 11.m über eine optische Einrichtung 15. Die Strahlen durchlaufen die ersten drei Kunststoffteile 1.1, 1.2 und 1.3 mit den zwischenliegenden Grenzschichten 2.1, 2.2 und treffen in der Grenzschicht 2.n-1 auf ein weiteres Energiekonvertierungsmittel 4.n-1, das beide Strahlen 11.1, 11.m absorbiert. Die absorbierte Energie beider Strahlen 11.1, 11.m reicht gemeinsam aus, um eine dritte Schweißnahtstelle 3.n-1 zu schaffen; trifft nur einer der Strahlen 11.1 oder 11.m alleine auf die Grenzschicht 2.n-1, so erfolgt eine Erwärmung, jedoch keine Aufschmelzung.

Die Dicke eines oben liegenden, zu durchstrahlenden Kunststoffteils 1.1 ist bei entsprechender Lichtdurchlässigkeit für einen Laserstrahl 11.1, der von einem Laser 10.1 ausgesandt wird, nahezu beliebig, solange die Lichtdämpfung bzw. Absorption in dem Kunststoffteil 1.1 nicht so stark wird, dass eine Aufschmelzung der Grenzschicht 2.1 nicht mehr erreichbar ist. Die Dicke des nicht durchstrahlten, unteren Kunststoffteils 1.2 ist in jedem Fall beliebig.

Der Laserstrahl 11.1 durchläuft das Kunststoffteil 1.1, trifft in der Grenzschicht 2.1 auf das dort eingebrachte Energiekonvertierungsmittel 4.1, wobei die Lichtenergie in Wärmeenergie umgewandelt wird. Nach den Gesetzmäßigkeiten der Thermodynamik und unter Berücksichtigung von Umwelteinflüssen, z. B. durch Abkühlung, kann die Wärmemenge pro Zeit berechnet werden, die in die Grenzschicht eingebracht werden muss, um ein Anschmelzen der Kunststoffteile 1.1, 1.2 im Bereich der Grenzschicht 2.1 zu bewirken, ohne jedoch ein vollständiges Aufschmelzen, Erweichen oder gar Zerstören der Kunststoffteile 1.1, 1.2 zu bewirken.

Neben der Beeinflussung der einzubringenden Wärmemenge durch Wahl des Absorptionskoeffizienten und der Schichtdicke des jeweiligen Energiekonvertierungsmittels 4.1, ist es auch möglich, die vom Laser 10.1 ausgesandte Energie zu steuern, beispielsweise durch Steuerung der Pulslänge und -frequenz.

Ebenso kann eine gezielte Fokussierung bzw. Defokussierung des Laserstrahls 11.1 vorgenommen werden.

Durch den Schweißvorgang bildet sich eine linsenförmige Schweißnahtstelle 3.1, die zunächst schmelzeförmig vorliegt und nach dem Ende der Bestrahlung abkühlt und erstarrt. Die Symmetrieebene der Schweißnahtstelle 3.1 bzw. deren Schwerpunkt liegt etwa in der Grenzschicht 2.1.

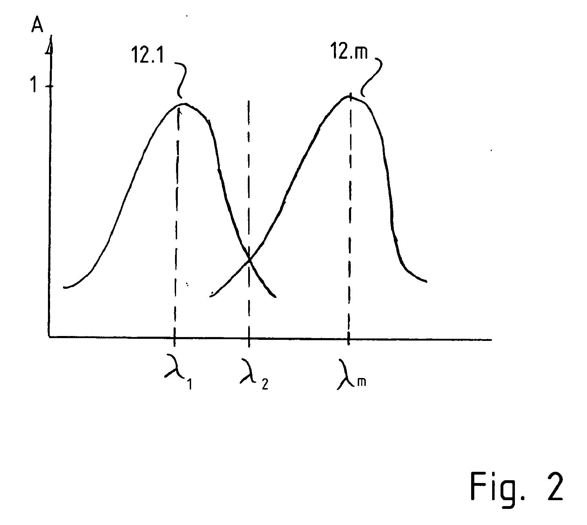

Weiterhin kann über den Anpressdruck der Fügepartner und des dazwischenliegenden Energiekonvertierungsmittels der Wärmeübergang aus dem Energiekonvertierungsmittel in die anliegenden Kunststoffteile und damit die Dissipation der in Grenzschicht 2.1 absorbierten Wärme in die Kunststoffteile beeinflusst werden. In den Fig. 1 und 2 ist der Anpressdruck durch die mit P bezeichneten Pfeile dargestellt. Durch hohen Anpressdruck P dringt die Schweißnahtstelle 3.1 weiter in die Kunststoffteile 1.1 und 1.2 ein, so dass die Schweißnahtstelle 3.1 einen ellipsoiden Querschnitt mit großer Höhe, aber geringer Ausdehnung hat. Demgegenüber führt ein vergleichsweise niedrigerer Anpressdruck P zur Ausbildung einer Schweißnahtstelle 3.1 mit einem ellipsoiden Querschnitt von geringerer Höhe, aber größerer Breite.

In Fig. 2 ist der Absorptionsfaktor A der Energiekonvertierungsmittel über die Wellenlänge λ schematisch aufgetragen. Die Kurve 12.1 zeigt die Absorption des Lichtes eines ersten Energiekonvertierungsmittels 4.1, die Kurve 12.m die eines zweiten Energiekonvertierungsmittels 4.1. Die Laser 11.1, 11.m werden so gewählt, dass ihre Wellenlängen im jeweiligen Bereich der stärksten Absorption λ₁ bzw. λₘ liegen.

Für den Bereich der Überschneidung der Kurven 12.1, 12.m ergibt sich folgende Möglichkeit: Es kann ein weiterer Laser mit einer Wellenlänge λ₂ vorgesehen werden. Die Energiekonvertierungsmittel gemäß 12.1 und 12.m, die bei λ₂ noch etwa die Hälfte ihre maximalen Absorption haben, werden gemischt. Bei Bestrahlung mit einem Laserstrahl mit Licht der Wellenlänge λ₂ absorbiert jedes Energiekonvertierungsmittel einen Teil der Energie. Zusammen reicht dies zur Bewirkung einer lokalen Aufschmelzung und Verschweißung, jedoch nicht durch einen Lichtstrahl mit der Wellenlänge λ₁ oder λₘ allein. Somit ist es möglich, bei einem Gewebe nur die Kreuzungspunkte zu verschweißen, wenn die Schussfäden mit dem ersten Energiekonvertierungsmittel und die Kettfäden mit dem zweiten beschichtet sind. Im Überlappungsbereich am Knotenpunkt liegen beide Energiekonvertierungsmittel aneinander vor, so dass ein Laserstrahl mit der Wellenlänge λ₂ nur dort eine Verschweißung bewirken kann, während er ansonsten vollflächig über das Gewebe streichen kann, ohne dieses aufzuschmelzen. Durch die bloße Verbindung der Knotenpunkte bleibt das Gewebe flexibel.

Ist nur eine Schweißnahtstelle zu erzeugen, bietet sich die Verwendung eines kostengünstigen Halbleiterlasers zur Erzeugung des Laserstrahl an und von Kohlenstoff, insbesondere in Form von Russ, als Energiekonvertierungsmittel in der Grenzschicht. Es kann sogar ein einfacher Auftrag des Energiekonvertierungsmittel durch schwarz pigmentierte Lack-Farbstifte vorgenommen werden.

Beim mehrlagigen Laserdurchstrahlschweißen müssen die einzelnen Laser 10.1,...,10.n so gewählt sein, dass sie in Frequenzbändern Licht emittieren, die hinsichtlich der Absorption des Energiekonvertierungsmittels ausreichend weit auseinander liegen. Beispielsweise können Excimer-Gas-Laser mit einem der folgenden Lasermedien ausgewählt werden:
- F₂ mit einer Wellenlänge von 157 nm,
- ArF mit einer Wellenlänge von 193 nm,
- KrCl mit einer Wellenlänge von 222 nm,
- KrF mit einer Wellenlänge von 248 nm,
- XeCl mit einer Wellenlänge von 308 nm,
- N₂ mit einer Wellenlänge von 337 nm, oder
- XeF mit einer Wellenlänge von 351 nm.

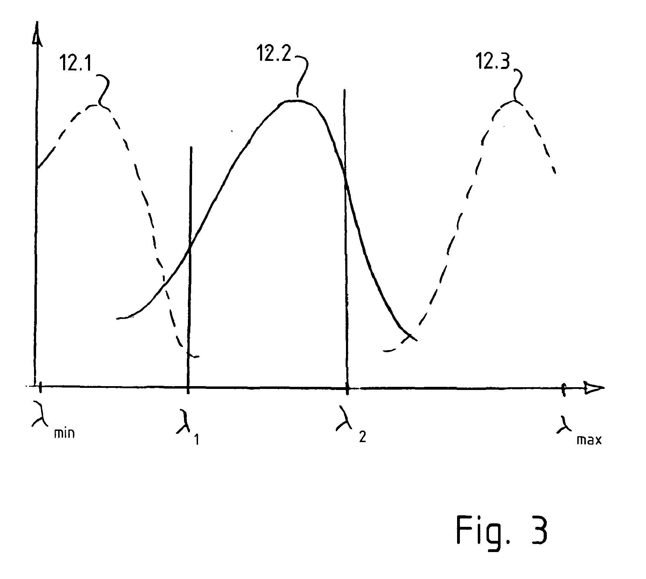

Die Herstellung einer Siegelnaht mit Garantiefunktion wird anhand von Fig. 3 erläutert. Es werden zwei Laser ausgewählt, die Licht der Wellenlängen λ₁ und λ₂ emittieren. Für den dazwischenliegenden Bereich sind keine Laserstrahlquellen mit eng begrenztem Spektrum bekannt. Bei λ₁ liegt ein Absorptionsgrad des Energiekonvertierungsmittel gemäß Kurve 12.2 von etwa 0,25 und bei λ₂ von etwa 0,75 vor. Bei gleichzeitiger Bestrahlung mit Lasern der Wellenlängen λ₁ und λ₂ erfolgt eine Aufschmelzung des Siegelbereichs. Die Bestrahlung mit nur einem der Laser reicht indes noch nicht, um die Siegelnaht zu schließen oder zu öffnen. Durch Einbettung von Energiekonvertierungsmitteln in die zu fügenden Kunststoffteile mit einer Absorption in benachbarten Spektralbereichen gemäß Kurve 12.1 bzw. 12.3 wird erreicht, dass eine vollständige Aufschmelzung und damit Zerstörung der Kunststoffteile erfolgt, wenn versucht wird, die Siegelschicht unberechtigt mit einer unspezifischen Strahlungsquelle mit breitem Spektrum von λₘᵢₙ bis λₘₐₓ zu öffnen. Das Schließen und Öffnen der Siegelnaht setzt daher die genaue Kenntnis von der Absorption und der Schichtdicke des Energiekonvertierungsmittel und die Wellenlängen geeigneter Laser voraus.

## Patentansprüche

1. Verfahren zum Laserdurchstrahlschweißen von mehr als zwei Kunststoffteilen (1.1,...,1.n), mit folgenden Verfahrensschritten:
- Bereitstellen von m Laserstrahlen (11.1,...,11.m) mit unterschiedlichen Wellenlängen λ₁,...,λₘ in einem Spektrum zwischen einer unteren Wellenlänge λₘᵢₙ und einer oberen Wellenlänge λₘₐₓ,
- Aneinanderpressen von n Kunststoffteilen (1.1,..., 1.n) unter jeweiliger Ausbildung einer Grenzschicht (2.1,...,2.n-1) zwischen je zwei aneinanderliegenden Kunststoffteilen,
wobei wenigstens n-1 aneinanderliegende Kunststoffteile (1.1,..., 1.n-1) lichtdurchlässig für wenigstens eine Wellenlänge eines Laserstrahls in dem Spektrum von λₘᵢₙ bis λₘₐₓ sind, und
wobei ein außenliegendes Kunststoffteil (1.n) eine beliebige Lichtdurchlässigkeit aufweist,
- Einbringen wenigstens eines Energiekonvertierungsmittels (4.1,...,4.n-1), welches die Lichtenergie wenigstens einer der Laserstrahlen (11.1,...,11.m) im Spektrum von λₘ₀ bis λₘ₁ absorbiert, in jede Grenzschicht (2.1,...,2.n-1);
- gleichzeitiges oder aufeinanderfolgendes Bestrahlen der Grenzschichten (2.1,...,2.n-1) mit den Laserstrahlen (11.1,..., 11.m) unter Durchstrahlung der über der jeweiligen Grenzschicht liegenden Kunststoffteile;
- partielles Aufschmelzenlassen der jeweiligen Kunststoffteile im Bereich jeder Grenzschicht und Abkühlenlassen unter Ausbildung einer Schweißnahtstelle (3.1,...3.n-1) als innige Verbindung zwischen den Kunststoffteilen (1.1,...,1.n).
**dadurch gekennzeichnet, dass** in wenigstens eine der Grenzschichten (2.n-1) ein Energiekonvertierungsmittel (4.n-1) eingebracht wird, das unterschiedliche Wellenlängen λ₁, λₘ absorbiert, und dass die an der Grenzschicht (2.n-1) anliegenden Kunststoffteile (1.n-1, 1.n) durch Bestrahlen der Grenzschicht (2.n-1) mit wenigstens zwei Laserstrahlen (11.1,11.m) mit den Wellenlängen λ₁, λₘ aufgeschmolzen werden, wobei die Schichtdicke und/oder der Absorptionskoeffizient des Energiekonvertierungsmittels (4.n-1) und/oder die Stärke und/oder Wirkdauer der Energie der Laserstrahlen (11.1,11.m) so gewählt sind, dass erst durch gleichzeitiges Bestrahlen mit den wenigstens zwei Laserstrahlen (11.1,11.m) eine Erwärmung der Kunststoffteile (1.n-1, 1.n) bis zur Aufschmelzung und Ausbildung einer Schweißnahtstelle (3.n) erfolgt.

2. Verfahren nach Anspruch 1, **dadurch gekennzeichnet, dass** das Energiekonvertierungsmittel in Form einer lichtenergieabsorbierenden Schweißfolie zwischen die Kunststoffteile gelegt wird.

3. Verfahren nach Anspruch 1 oder 2, dass die Schweißfolie Zusatzstoffe wie im ultravioletten Licht vernetzende oder im ultravioletten Licht sichtbare Mittel enthält.

4. Verfahren nach einem der Ansprüche, **dadurch gekennzeichnet, dass** das Energiekonvertierungsmittel (4.1,...,4.n-1) jeweils auf die Rückseite eines durchstrahlten Kunststoffteils (1.1,...,1.n-1) aufgebracht wird.

5. verfahren nach einem der vorhergehenden Ansprüche, **dadurch gekennzeichnet, dass** als Energiekonvertierungsmittel (4.1,...,4.n-1) Kohlenstoff gewählt wird.

6. Verfahren nach einem der vorhergehenden Ansprüche, **dadurch gekennzeichnet, dass** die Eindringtiefe der Schweißnahtstelle (3.1,...,3.n-1) in die Kunststoffteile (1.1, 1.n) über einen Anpressdruck P variiert wird.

## Claims

1. Method for laser beam welding of more than two plastic parts (1.1, ..., 1.n), with the following method steps:
- provision of m laser beams (11.1, ..., 11.m) with different wavelengths λ₁, λₘ in a spectrum between a lower wavelength λₘᵢₙ and an upper wavelength λₘₐₓ,
- pressing together of n plastic parts (1.1, ..., 1.n) with the formation of a boundary layer (2.1, ..., 2.n-1) between each two plastic parts lying one against the other,
whereby at least n-1 plastic parts (1.1, ..., 1.n.-1) lying one against the other are light-permeable for at least one wavelength of a laser beam in the spectrum of λₘᵢₙ to λₘₐₓ, and
whereby an outer-lying plastic part (1.n) has a given light permeability,
- arrangement of at least one energy converting medium (4.1, ..., 4.n-1) which absorbs the light energy of at least one of the laser beams (11.1, ..., 11.m) in the spectrum of λₘₙ to λₘ₁ into each boundary layer (2.1, ..., 2.n-1),
- simultaneous or successive irradiation of the boundary layers (2.1, ..., 2.n-1) with the laser beams (11.1, ..., 11.m), with radiation through the plastic parts lying above the respective boundary layer,
- allowing the respective plastic parts to partially melt in the region of each boundary layer and allowing them to cool with the formation of a welding seam point (3.1, ... 3.n-1) as an intimate connection between the plastic parts (1.1, ..., 1.n),
**characterised in that** an energy converting medium (4.n-1) is arranged in at least one of the boundary layers (2.n-1) which absorbs different wavelengths λ1, λm, and **in that** the plastic parts (1.n-1, 1.n) lying against the boundary layer (2.n-1) are melted through irradiation of the boundary layer (2.n-1) with at least two laser beams (11.1, 11.m) with the wavelengths λ₁, λₘ, whereby the layer thickness and / or the absorption coefficient of the energy converting medium (4.n-1) and / or the strength and / or effective duration of the energy of the laser beams (11.1, 11.m) are selected so that heating of the plastic parts (11.1, 11.m) is only realised through simultaneous irradiation with the at least two laser beams (11.1, 11.m) until melting occurs and a welding seam point (3.n) is formed.

2. Method according to claim 1, **characterised in that** the energy converting medium is arranged in the form of a light energy absorbing welding film between the plastic parts.

3. Method according to claim 1 or 2, **characterised in that** the welding film comprises additional materials such as ultraviolet light-cured materials or materials that are visible in ultraviolet light.

4. Method according to one of the claims, **characterised in that** the energy converting medium (4.1, ..., 4.n-1) is applied in each case to the rear side of an irradiated plastic part (1.1, ..., 1.n-1).

5. Method according to one of the preceding claims, **characterised in that** carbon is selected as an energy converting medium (4.1, ..., 4.n-1).

6. Method according to one of the preceding claims, **characterised in that** the penetration depth of the welding seam point (3.1, ..., 3.n-1) in the plastic parts (1.1, 1.n) is varied by means of a contact pressure P.

## Revendications

1. Procédé de soudage par faisceau laser de plus de deux pièces en matière plastique (1.1, ..., 1.n) comprenant les opérations suivantes:
- préparation de m faisceaux laser (11.1, ..., 11.m) de différentes longueurs d'ondes λ₁, ..., λₘ dans un spectre compris entre une longueur d'onde inférieure λₘᵢₙ et une longueur d'onde supérieure λₘₐₓ,
- assemblage par pressage de n pièces en matière plastique (1.1, ..., 1.n), en constituant une couche limite (2.1, ..., 2.n-1) entre chaque fois deux pièces adjacentes, assemblage dans lequel au moins n-1 pièces (1.1, ..., 1.n-1) adjacentes laissent passer la lumière d'au moins une longueur d'onde d'un faisceau laser dont le spectre est compris entre λₘᵢₙ et λₘₐₓ et dans lequel une pièce en matière plastique (1.n) située en périphérie présente une transparence quelconque à la lumière,
- introduction dans chaque couche limite (2.1, ..., 2.n-1) d'au moins un moyen de conversion d'énergie (4.1, ..., 4.n-1) qui absorbe l'énergie lumineuse d'au moins un des faisceaux laser (11.1, ..., 11.m) dans le spectre compris entre λₘ₀ et λₘ₁;
- envoi simultané ou successif des faisceaux laser (11.1, ..., 11.m) sur les couches limites (2.1, ..., 2.n-1), le laser traversant les pièces en matière plastique situées au-dessus de la couche limite concernée ;
- on laisse les pièces en matière plastique entrer en fusion partielle respectivement dans la zone adjacente à la couche limite correspondante, puis on laisse les pièces refroidir, ce qui entraîne la formation d'un point de soudure (3.1, ... 3.n-1) qui constitue une liaison intime entre les pièces en matière plastique (1.1, ..., 1.n),
**caractérisé en ce que**, dans au moins une des couches limites (2.n-1), il est introduit un moyen de conversion d'énergie (4.n-1) absorbant différentes longueurs d'ondes λ₁, λₘ et **en ce que** les pièces en matière plastique (1.n-1, 1.n) adjacentes à la couche limite (2.n-1) fondent superficiellement sous l'effet de l'envoi sur la couche limite (2.n-1) d'au moins deux faisceaux laser (11.1, 11.m) aux longueurs d'ondes λ₁, λₘ, l'épaisseur de la couche et/ou le coefficient d'absorption du moyen de conversion d'énergie (4.n-1) et/ou la puissance et/ou la durée effective de l'énergie des faisceaux laser (11.1, 11.m) étant choisis de telle sorte que seul l'envoi simultané des -au minimum deux- faisceaux laser (11.1, 11.m) conduit à un échauffement des pièces en matière plastique (1.n-1, 1.n) jusqu'à leur fusion superficielle et à la formation d'un point de soudure (3.n-1).

2. Procédé selon la revendication 1, **caractérisé en ce que** le moyen de conversion d'énergie est placé entre les pièces en matière plastique sous la forme d'une feuille de soudage absorbant l'énergie lumineuse.

3. Procédé selon la revendication 1 ou 2, **caractérisé en ce que** la feuille de soudage contient des additifs tels que des agents réticulant à la lumière ultraviolette ou des agents visibles à la lumière ultraviolette.

4. Procédé selon l'une quelconque des revendications précédentes, **caractérisé en ce que** le moyen de conversion d'énergie (4.1, ..., 4.n-1) est mis en place respectivement sur la face arrière des pièces en matière plastique (1.1, ..., 1.n-1) traversées par le faisceau laser.

5. Procédé selon l'une quelconque des revendications précédentes, **caractérisé en ce que** le moyen de conversion d'énergie (4.1, ..., 4.n-1) choisi est le carbone.

6. Procédé selon l'une quelconque des revendications précédentes, **caractérisé en ce que** l'on fait varier la profondeur de pénétration du point de soudure (3.1, ..., 3.n-1) dans les pièces en matière plastique (1.1, 1.n) par le biais de la pression P appliquée sur ces pièces.
